# EUROPÄISCHE PATENTSCHRIFT

(11) **EP 1 083 693 B1**
(45) Veröffentlichungstag und Bekanntmachung des Hinweises auf die Patenterteilung: **17.06.2009**
(21) Anmeldenummer: 00440233.5
(22) Anmeldetag: 25.08.2000
(51) Int. Cl.: H04J 3/16

(54) **Verfahren und Vorrichtung zum Umwandeln eines SONET-Signals in ein SDH-Signal**
Method and device for translation of a SONET-signal into an SDH-signal
Procédé et dispositif pour transformer un signal du type SONET au signal du type SDH ( HNS)

(30) Priorität: 11.09.1999 DE 19943625
(43) Veröffentlichungstag der Anmeldung: 14.03.2001
(73) Patentinhaber: Alcatel Lucent, 75008 Paris (FR)
(72) Erfinder: Heuer, Volkmar, 71254 Ditzingen (DE); Kleine-Altekamp, Harald, 74343 Sachsenheim (DE); Jäckel, Hans-Jörg, Dr., 70439 Stuttgart (DE)
(74) Vertreter: Urlichs, Stefan

(56) Entgegenhaltungen:
- US-A- 5 857 092
- PATENT ABSTRACTS OF JAPAN Bd. 1995, Nr. 09, 31. Oktober 1995 (1995-10-31) & JP 07 154357 A (NEC CORP), 16. Juni 1995 (1995-06-16)

## Beschreibung

Die Erfindung betrifft ein Verfahren und eine Vorrichtung Umwandeln eines ersten synchronen Nachrichtensignals von einem ersten synchronen digitalen Nachrichtenübertragungssystem in ein zweites synchrones Nachrichtensignal für ein zweites Nachrichtenübertragungssystem nach dem Oberbegriff der Ansprüche 1 und 5. Insbesondere betrifft die Erfindung ein Verfahren und eine Vorrichtung zum Umwandeln eines SONET-Signals in ein SDH-Signal und umgekehrt.

Um Nutzdaten über ein synchrones digitales Nachrichtenübertragungsnetz zu transportieren, werden die Nutzdaten in Container (C) gepackt. Es können je nach Volumen der Nutzdaten Container unterschiedlicher Größe verwendet werden. Die Container erhalten einen Kopfbereich (Overhead) mit dem zusammen sie als virtuelle Container (VC) bezeichnet werden und werden in einen als synchrones Transportmodul (STM) bezeichneten Transportrahmen verpackt. Dabei werden stets kleinere virtuelle Container zunächst in einem größeren virtuellen Container zusammengefaßt. Die größeren virtuellen Container können in den Transportrahmen frei positioniert sein. Ein Zeiger im Kopfbereich (Overhead) eines Transportrahmens zeigt auf den Beginn des größeren virtuellen Containers. Zusammen mit dem Zeiger wird dieser als "*Administrative Unit*" (AU) bezeichnet. Im Kopfbereich des größeren virtuellen Containers zeigen wiederum Zeiger auf den Beginn der kleineren virtuellen Container. Diese werden zusammen mit dem ihnen jeweils zugeordneten Zeiger als "*Tributary Unit*" (TU) bezeichnet.

Nun sind zwei Varianten synchroner digitaler Nachrichtenübertragungssysteme bekannt: In Europa wird ein als Synchrone Digitale Hierarchie (SDH) bekanntes System verwendet, während das nordamerikanische System als Synchronous Optical Network (SONET) bekannt ist. Die beiden Systeme unterscheiden sich geringfügig, doch bewirken die Unterschiede, daß die Systeme nicht direkt kompatibel miteinander sind.

Die Multiplexhierarchie von SDH sieht als größten virtuellen Container den VC-4 mit einer Kapazität von 149 Mbit vor. Darin können mehrere kleinere Container vom Typ VC-3, VC-2 oder VC-12 verschachtelt werden. Der VC-4 zusammen mit seinem Zeiger heißt AU-4, die kleineren Container mit ihren zugehörigen Zeigern heißen TU-3 und TU-2. In einem Transportmodul vom Typ STM-1 wird ein AU-4 transportiert, der wiederum drei TU-3 enthalten kann.

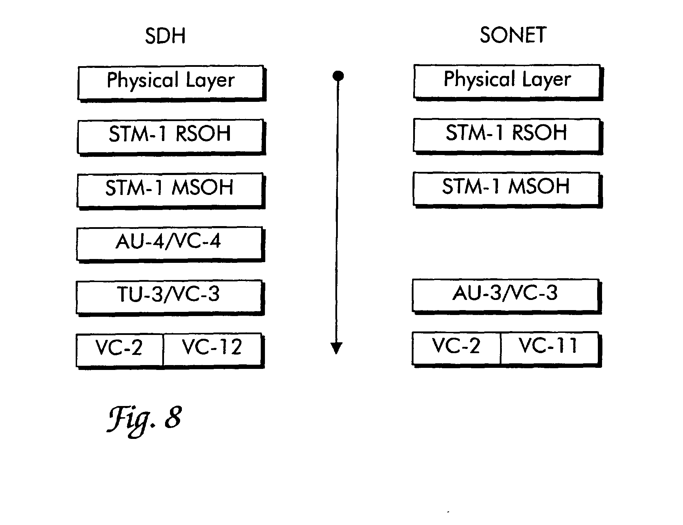

Bei SONET ist der größte Container der VC-3 mit einer Kapazität von 49 Mbit. Dieser kann mehrere kleinere Container vom Typ VC-2 oder VC-11 enthalten. Die virtuellen Container werden bei SONET auch oft als "*virtual Tributaries*" (VT) bezeichnet. Der VC-3 zusammen mit seinem Zeiger heißt AU-3, die kleineren Container mit ihren zugehörigen Zeigern heißen TU-2. Ein zum VC-4 von SDH kompatibler Container existiert in SONET nicht. In einem Transportrahmen vom Typ STM-1, das bei SONET auch als STS-3 (elektrisch) oder als OC-3 (optisch) bezeichnet wird, werden drei AU-3 transportiert, die jeweils wiederum sieben TU-2 enthalten können. Die geschilderten Multiplexhierarchien von SDH und SONET sind in ITU-T G.707 Kapitel 6 beschrieben. Die Multiplexhierarchie von SDH weist also gegenüber der Multiplexhierarchie von SONET eine zusätzliche Hierarchieebene auf, nämlich den VC-4. Die übrigen Hirarchieebenen beider Multiplexhierarchien entsprechen einander. Die Hierarchieebenen beider Systeme sind in Figur 8 gezeigt und werden an späterer Stelle ausführlich erläutert.

Um ein synchrones digitales Nachrichtenübertragungsnetz vom Typ SDH mit einem synchronen digitalen Nachrichtenübertragungsnetz vom Typ SONET zu verbinden werden bislang plesiochrone Schnittstellen verwendet, die eine Übertragungsrate von 45 Mbit unterstützen wie z.B. DS-3 oder E1. Dabei werden die Nutzdaten auf VC-3-Ebene über die plesiochrone Schnittstelle übertragen und am anderen Ende werden wieder neue VC-3 gebildet. Dies hat den Nachteil, daß SDH Überwachungsfunktionen wie eine Ende-zu-Ende-Überwachung des Übertragungspfades nicht ausgeführt werden können, da der Overhead der Container nicht über die plesiochrone Schnittstelle übertragen wird.

Alternativ ist in ITU-T G.707 Kapitel 6.4 auch eine direkte Verbindung der synchronen Transportmodule STM-1 von SDH und SONET auf VC-3-Ebene festgelegt. Ein AU-3 von SONET wird in einen VC-3 zurückgeführt. Für den VC-3 wird ein neuer Zeiger bestimmt und damit ein TU-3 gebildet. Drei TU-3 werden zu einem VC-4 zusammengefaßt und ein Zeiger für den VC-4 bestimmt um einen AU-4 zu bilden, der dann in einem synchronen Transportmodul STM-1 übertragen wird.

In einem synchronen digitalen Nachrichtenübertragungsnetz wird für jeden virtuellen Container eine Alarmüberwachung (alarm surveillance) und eine Qualitätsüberwachung (performance monitoring) durchgeführt. Dazu werden Overhead-Bytes der einzelnen virtuellen Container ausgewertet. Die Ergebnisse werden einem zentralen Netzwerkmanagementsystem mitgeteilt. Da die Multiplexhierarchien von SDH und SONET sich unterscheiden, unterscheiden sich auch die durchzuführenden Überwachungsfunktionen. SDH- und SONET-Systeme besitzen daher jeweils ein eigenes Netzwerkmanagementsystem. Bei der oben genannten direkten Verbindung auf STM-1-Ebene zwischen SDH und SONET besteht die Schwierigkeit, daß auf der SONET-Seite der Umsetzungseinrichtung SONET-spezifische Überwachungsfunktionen durchgeführt werden müssen und auf der SDH-Seite SDH-spezifische. In dem Netzelement, das die Konvertierung durchführt, ist es also erforderlich, Überwachungsfunktionen beider Systeme durchzuführen.

Dies ist ausgesprochen aufwendig, da das Netzelement dann zwei logisch getrennte Steuerungseinrichtungen benötigt. Zudem können Probleme bei der Zusammenarbeit der zwei logisch getrennten Steuerungseinrichtungen auftreten. Es ist daher nicht erwünscht, in einem Netzelement Überwachungsfunktionen verschiedener Übertragungssysteme durchführen zu müssen.

US 5,857,092 beschreibt eine Schnittstelleneinrichtung zur Verbindung von SDH und SONET-Netzen. Eine Alarmverarbeitung findet für die SDH und SONET-Signale getrennt statt.

Eine Aufgabe der Erfindung ist daher, ein Verfahren anzugeben, nach dem ein Nachrichtensignal eines ersten synchronen digitalen Nachrichtenübertragungssystems in ein Nachrichtensignal eines zweiten Nachrichtenübertragungssystems umgewandelt werden kann, ohne daß Überwachungsfunktionen beider Systeme ausgeführt werden müssen. Eine weitere Aufgabe der Erfindung besteht darin, eine Vorrichtung zur Umwandlung eines Nachrichtensignal eines ersten synchronen digitalen Nachrichtenübertragungssystems in ein Nachrichtensignal eines zweiten Nachrichtenübertragungssystems anzugeben, die mit nur einer Steuerungseinrichtung zur Durchführung von Überwachungsfunktionen auskommt.

Die Aufgabe wird hinsichtlich des Verfahrens gelöst durch die Merkmale des Anspruchs 1 und hinsichtlich der Vorrichtung durch die Merkmale des Anspruchs 5. Vorteilhafte Ausgestaltungen sind den abhängigen Ansprüchen zu entnehmen.

Die Erfindung hat den Vorteil, daß eine Ende-zu-Ende-Überwachung auf VC-3-Ebene ermöglicht wird.

Im folgenden wird die Erfindung in einem Ausführungsbeispiel anhand der Figuren 1 bis 9 näher erläutert. Es zeigt:
- Figur 1:: Ein SDH-Netz und ein SONET-Netz, die miteinander auf STM-1-Ebene verbunden sind,
- Figur 2:: eine detailliertere Ansicht der Netze aus Figur 2, bei der die Umsetzung durch einen Multiplexer vorgenommen wird,
- Figur 3:: eine logische Darstellung des Multiplexers, der die Umsetzung vornimmt,
- Figur 4:: die größte Multiplexeinheit von SONET von Typ AU-3,
- Figur 5:: die der Multiplexeinheit aus Figur 4 entsprechende Multiplexeinheit von SDH vom Typ TU-3,
- Figur 6:: einen Transportrahmen STS-3 von SONET, der beispielhaft eine Multiplexeinheit AU-3 enthält,
- Figur 7:: einen Transportrahmen STM-1 von SDH, der beispielhaft eine Multiplexeinheit AU-4 enthält, in der wiederum eine Multiplexeinheit TU-3 enthalten ist, und
- Figur 8:: die Multiplexhierarchien von SDH und SONET.

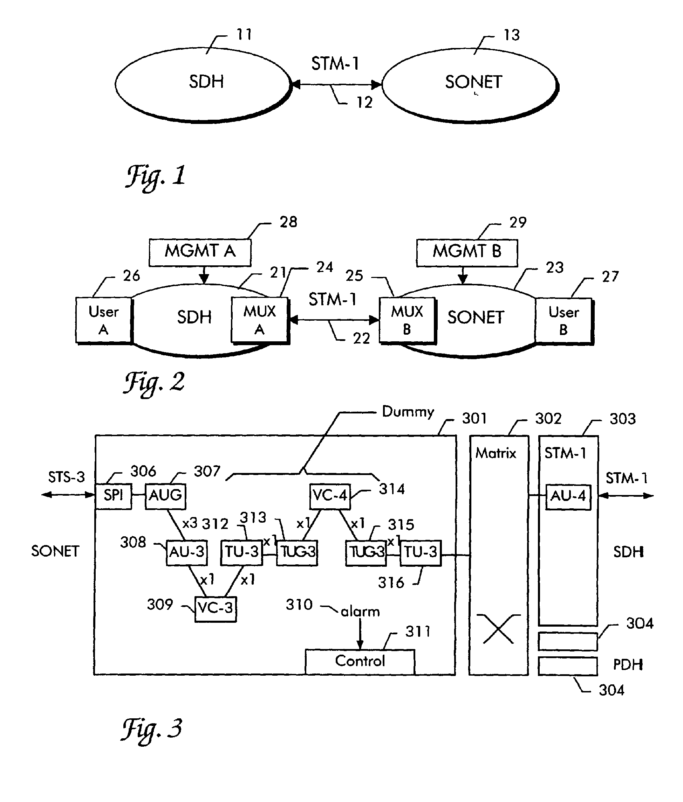

In Europa wird ein synchrones digitales Übertragungsverfahren eingesetzt, daß als synchrone digitale Hierarchie (SDH) bezeichnet wird. In Nordamerika wird ein ähnliches Übertragungsverfahren eingesetzt, daß als Synchronous Optical Network (SONET) bezeichnet wird. Bislang werden zwei Übertragungssysteme, die nach jeweils einem der beiden Verfahren arbeiten, über plesiochrone 45 Mbit-Schnittstellen verbunden. Zukünftig sollen solche Systeme jedoch direkt auf STM-1-Ebene verbunden werden. Dies ist in Figur 1 schematisch gezeigt. Das SDH-System 11 ist über einen STM-1-Link 12 mit dem SONET-System 13 verbunden. Dies ist möglich, da das Rahmenformat beider Übertragungssysteme identisch ist, d.h. beide Systeme nutzen als Transportrahmen ein synchrones Transportmodul vom Typ STM-1. In der Nomenklatur von SONET wird ein solches STM-1-Signal auch als STS-3 bezeichnet, wenn es elektrisch übertragen wird oder als OC-3 (optical carrier), wenn es optisch übertragen wird. Bei den Übertragungssystemen handelt es sich um Netzwerke von untereinander optisch oder elektrisch verbundenen Netzelementen.

Unterschiede zwischen den beiden Systemen bestehen jedoch in der Multiplexhierarchie, nach der die Transportrahmen mit Nutzdaten bepackt sind. Bei den übertragenen Nachrichtensignalen handelt es sich um Multiplexsignale, die aus Multiplexeinheiten unterschiedlicher Größe zusammengesetzt sind. Dabei werden kleinere Multiplexeinheiten in größere Multiplexeinheiten zusammengefaßt und die größeren Multiplexeinheiten werden in die Transportrahmen gepackt. Dabei können die größeren Multiplexeinheiten im Nutzlastbereich der Transportrahmen beliebig positioniert sein und sich auch über zwei aufeinanderfolgende Transportrahmen erstrecken. Ein Zeiger im Kopfbereich der Transportrahmen adressiert den Beginn der darin enthaltenen größten Multiplexeinheit.

Bei SDH ist die größte Multiplexeinheit, die in jedem Transportrahmen enthalten sein muß, der AU-4 (Administrative Unit). Bei SONET existiert eine Multiplexeinheit dieser Größe nicht und es müssen stets drei Multiplexeinheiten vom Typ AU-3 in einem Rahmen enthalten sein. Der Multiplexeinheit AU-3 entspricht bei SDH jedoch die Multiplexeinheit TU-3 (Tributary Unit), die jedoch wiederum in der größeren Multiplexeinheit AU-4 verschachtelt sein muß. Die Multiplexhierarchie von SDH besitzt also gegenüber der SONET-Hierarchie eine zusätzliche Multiplexebene.

Dies macht eine Umsetzung von Nachrichtensignalen, die nach der Multiplexhierarchie von SONET aufgebaut sind, in Nachrichtensignale, die nach der Multiplexhierarchie von SDH aufgebaut sind, erforderlich. Eine solche Umsetzung wird in einer Anschlußschaltung eines Multiplexers vorgenommen, z.B. einer Schnittstellenkarte eines Add/Drop-Multiplexers oder eines digitalen Crossconnects.

Figur 2 zeigt daher etwas detaillierter die in Figur 1 abgebildete Netzverbindung. Ein SDH-System 21 ist über einen STM-1-Link 22 mit einem SONET-System 23 verbunden. Die eigentliche physikalische Verbindung der beiden Netzwerke ist eine optische oder elektrische Übertragungsleitung zwischen zwei Multiplexern MUX A 24 und MUX B 25. MUX A ist Teil des SDH-Systems, während MUX B Teil des SONET-Systems ist. Ein Benutzer A 26 des SDH-Systems 21 kann nun über diese Verbindung 22 mit einem Benutzer B 27 des SONET-Systems 23 Nachrichtensignale austauschen.

Für die Umsetzung bestehen nun zwei Möglichkeiten. Entweder MUX A 24 wandelt das in SDH vorgeschriebene Multiplexsignal von einem STM-1-Rahmen mit einer Multiplexeinheit AU-4 in einen STM-1-Rahmen mit drei Multiplexeinheiten AU-3 um und überträgt diese an MUX B 25. Oder MUX B empfängt ein SDH-typisches STM-1/AU-4 strukturiertes Nachrichtensignal und wandelt dies in ein STM-1/AU-3-strukturiertes Nachrichtensignal um. Wie diese Umwandlung genau vorgenommen wird, wird später beschrieben.

In jedem Falle muß die Umwandlung in einem der beiden gezeigten Multiplexer 24, 25 vorgenommen werden. Die beiden Nachrichtenübertragungssysteme 21, 23 haben jeweils ein eigenes zentrales Managementsystem 28, 29. Alle Netzelemente eines Systems müssen verschiedene Überwachungsfunktionen wie Alarm-Überwachung und Qualitätsüberwachung (performance monitoring) ausführen und die Überwachungsergebnisse an das Netzwerkmanagement mitteilen. Dazu muß auf Overhead-Bytes der Multiplexeinheiten zugegriffen werden. Die Überwachungsfunktionen müssen auf allen Ebenen der Multiplexhierarchie ausgeführt werden. Führt also beispielsweise MUX A die Umwandlung durch, so müßte er in der SDH-seitigen Schnittstellenschaltung die Überwachungsfunktionen auf den Ebenen der Multiplexhierarchie von SDH ausführen, in der SONET-seitigen Schnittstelle die Überwachungsfunktionen nach der SONET-Hierarchie. Da MUX A jedoch zum SDH-System gehört, muß er Ergebnisse der Überwachung nur an das übergeordnete Netzwerkmanagemensystem des SDH-Systems melden.

Da diese zweigleisige Überwachung aufwendig ist und zu Komplikationen führen würde, besteht ein Grundgedanke der Erfindung darin, die Überwachungsfunktionen nach nur einer der beiden Multiplexhierarchien durchzuführen und zusätzliche Hierarchieebenen der anderen Multiplexhierarchie zu simulieren und deren für die Überwachungsfunktionen relevante Parameter auf Standardwerte (Default-Werte) zu setzen.

Ein Blockdiagramm eines Multiplexers, der nach dieser Methode arbeitet, ist in Figur 3 gezeigt. Der Multiplexer hat eine erste Anschlußschaltung 301, die mit einer Schaltmatrix 302 verbunden ist. Auf der anderen Seite der Schaltmatrix sind weitere Anschlußschaltungen 303, 304 schematisch dargestellt.

Die erste Anschlußschaltung ist für den Empfang von Nachrichtensignalen 305 aus einem SONET-System ausgelegt. Derartige SONET-spezifische Nachrichtensignale sind z.B. das elektrische STS-3-Signal daß zu Transportrahmen strukturiert ist, die identisch mit den SDH-Transportrahmen STM-1 sind. In einer Anpassungsschaltung SPI 306 werden die elektrischen Eigenschaften angepaßt, die Transportrahmen ausgelesen sowie deren Zeiger und deren Multiplexerabschnitts-Overhead MSOH (MSOH: multiplexer section overhead) ausgewertet. Das im Nutzlastbereich des Transportrahmen enthaltene Signal wird an eine Verwaltungsgruppenschaltung AUG 307 (AUG: administrative unit group) weitergeleitet. Dort werden die drei zu einer AUG gruppierten Multiplexeinheiten vom Typ AU-3 entschachtelt und zeitversetzt oder parallel an eine AU-3-Multiplexeinheitenschaltung 308 weitergeleitet. Diese bildet aus den erhaltenen Multiplexeinheiten vom Typ AU-3 virtuelle Container VC-3 und leitet diese an VC-3-Virtualcontainerschaltung 309 weiter, wo der Kopfbereich der VC-3 ausgewertet und Überwachungsfunktionen auf der VC-3-Multiplexebene durchgeführt werden. Zu den Überwachungsfunktionen, die auf jeden VC-3 angewendet werden, zählen Alarmüberwachung und Qualitätsüberwachung. Alarme 310, die in einem entsprechenden Overhead-Byte eines VC-3 gesetzt sind, werden an eine Steuerungseinrichtung 311 gemeldet, von wo aus sie von dem übergeordneten Managementsystem des Netzes abgerufen werden können.

Mit den nachfolgend beschriebenen funktionalen Baugruppen wird die gegenüber der SDH-Multiplexhierarchie fehlende Multiplexebene simuliert, die anhand nur eines der drei pro Rahmen im empfangenen Nachrichtensignal enthaltenen virtuellen Container VC-3 beschrieben wird: In einer Schaltung 312 wird aus dem virtuellen Container VC-3 eine Multiplexeinheit TU-3 gebildet, die in einer Schaltung 313 zu einer TUG-3 "gruppiert" wird. Dieser Schritt ist nur formaler Natur, da die gebildete "Gruppe" ja nur einen VC-3 enthält. In einer Schaltung 314 wird Multiplexeinheitengruppe TUG-3 einem simulierten virtuellen Container vom Typ VC-4 zugeordnet. Damit ist die gegenüber SDH fehlende Hierarchieebene erreicht. Die Schaltung 314 wendet nun die Überwachungsfunktionen der simulierten Hierarchieebene auf den VC-4 an, indem als Ergebnis der Überwachungsfunktionen Standardwerte an die Steuerungseinrichtung 311 gemeldet werden. Diese Standardwerte sind für alle zu überwachenden Parameter "gute" Werte. D.h., für Alarme wird stets eine Meldung des Inhalts "alles in Ordnung" produziert und für Qualitätsüberwachungsdaten Meldungen des Inhalts "Signal fehlerfrei". Die simulierten Überwachungsfunktionen sind in der Figur 3 als "*Dummy*" bezeichnet.

Die Überwachungsfunktionen der gegenüber der SDH-Hierarchie fehlenden Multiplexebene sind damit ausgeführt und das Netzwerkmanagementsystem des SDH-Netzes ist somit zufriedengestellt. Nun wird die logische Zuweisung zu dem simulierten VC-4 wieder aufgehoben, indem in entsprechenden Schaltungsgruppen zunächst wieder eine Multiplexeinheitengruppe TUG-3 gebildet wird (Schaltung 315) und die darin enthaltene Multiplexeinheit TU-3 extrahiert wird (Schaltung 316). Der TU-3 wird dann der Schaltmatrix 302 zugeführt. Diese Schaltmatrix ist der Kern der Multiplexers und schaltet die ihr zugeführten Multiplexeinheiten im Zeit- und Raumbereich zu vordefinierten Ausgängen um Pfade in dem Nachrichtenübertragungssystem aufzubauen.

Von der Schaltmatrix 302 wird der TU-3 zu der Anschlußschaltung 303 geschaltet, welche synchrone Nachrichtensignale vom SDH-Typ sendet. Der TU-3 wird z.B. mit zwei weiteren Multiplexeinheiten vom Typ TU-3 zu einer Multiplexeinheit vom Typ VC-4 zusammengefaßt und daraus durch Bestimmen eines zugehörigen Zeigers eine Adminstrative Unit AU-4 gebildet, die dann als Nutzlast in einem STM-1 Rahmen gesendet wird.

Im Ausführungsbeispiel werden die geschilderten Funktionen von separaten Schaltungsgruppen ausgeführt. Es soll jedoch darauf hingewiesen werden, daß dieselben Funktionen auch als Software in einer prozessorgesteuerten Vorrichtung implementiert werden können. Es wird davon ausgegangen, daß eine solche Implementierung der Umwandlungs- wie auch der Überwachungsfunktionen als Software dem Fachmann anhand der vorstehenden und folgenden Beschreibung ohne Schwierigkeiten gelingt.

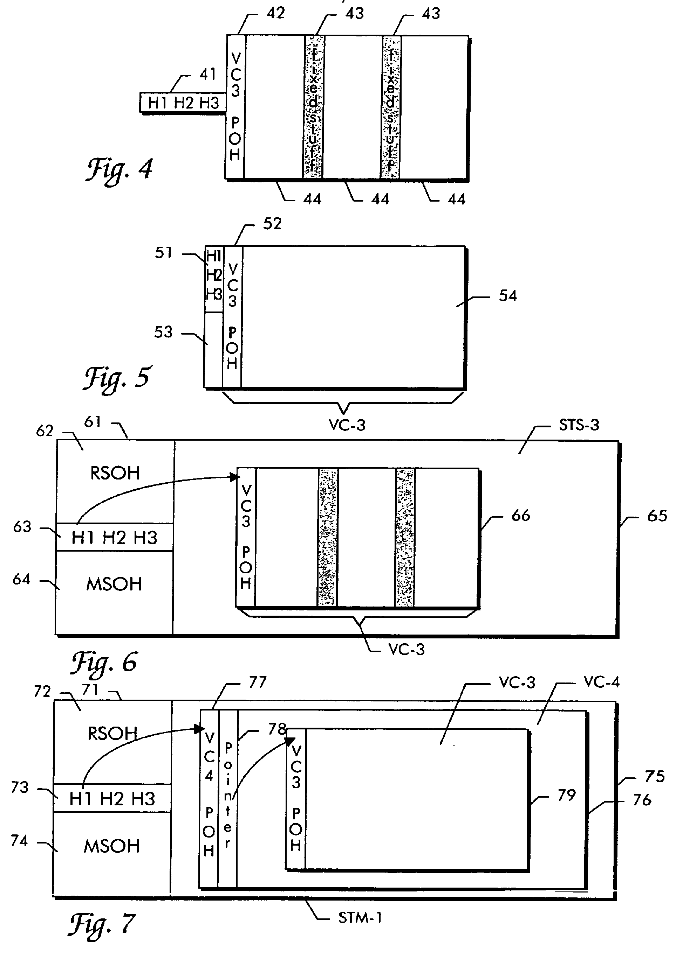

Anhand der Figuren 4 bis 7 wird nun beschrieben, wie die Multiplexeinheiten von SDH und SONET aufgebaut sind und wie eine Umwandlung ausgeführt wird. In Figur 4 ist die größte Multiplexeinheit von SONET, ein AU-3, gezeigt. Er enthält einem Zeiger 41, der im Overhead eines Transportrahmens enthalten ist und die drei als H1, H2 und H3 bezeichneten Bytes des Overheads belegt. Der Zeiger addressiert den Beginn der Multiplexeinheit. Diese ist spaltenweise aufgebaut und enthält eine erste Spalte 42 mit einem Kopfbereich und einen sich daran anschließenden Container mit Nutzdaten. Der Container enthält wiederum zwei feste Spalten 43 mit Stopfbytes und Nutzdatenbereiche 44. Jede Spalte enthält pro Zeile ein Byte und die Multiplexeinheiten werden zeilenweise gesendet.

Figur 5 zeigt die dem AU-3 von SONET entsprechende Multiplexeinheit in der SDH-Hierarchie, nämlich den TU-3. Der TU-3 enthält ebenfalls einen Zeiger 51 und einen festen Bereich für Stopfbytes 53. Daran schließt sich der Kopfbereich 52 des TU-3 und ein Container 54 mit Nutzdaten an. Der Container 54 enthält im Gegensatz zu der SONET AU-3 keine festen Spalten mit Stopfbytes.

Demzufolge wird bei der Umwandlung von AU-3 in TU-3 ein neuer Zeiger für die Position der Multiplexeinheit in einer Multiplexeinheit der übergeordneten Ebene berechnet. Außerdem werden die festen Spalten mit Stopfbytes des AU-3 entfernt und eventuell darin enthaltene Stopfbytes werden in den Bereich 53 des TU-3 geschrieben.

In Figur 6 ist gezeigt, wie bei SONET ein AU-3 in einem STM-1 (=STS-3 oder OC-3) Rahmen verpackt und übertragen wird. Der STM-1 Rahmen besteht aus einem Overhead 61 und einem Nutzdatenbereich ("*payload*") 65. Der Overhead wiederum ist aufgeteilt in einen Regeneratorabschnitts-Overhead RSOH ("*regenerator section overhead*") 62, einen Zeiger 63 und einen Multiplexerabschnitts-Overhead MSOH ("*multiplexer section overhead*") 64. Der Zeiger, der die Bytepositionen H1, H2 und H3 des Overheads belegt addressiert die im Nutzdatenbereich enthaltene Administrative Unit AU-3, die aus dem Zeiger 63 selbst und einem virtuellen Container 66 besteht und damit den in Figur 4 gezeigten Aufbau besitzt. Die Bytes H1, H2 und H3 sind jeweils dreifach vorhanden, so daß insgesamt drei AU-3 addressiert werden können.

Figur 7 zeigt die zu Figur 6 analoge Verschachtelung gemäß der Multiplexhierarchie von SDH. Der STM-1 Rahmen hat denselben Aufbau wie der Transportrahmen in Figur 6 aus einem Overhead 71 und einem Nutzdatenbereich 75. Der Overhead 71 besteht ebenfalls aus einem Regeneratorabschnitts-Overhead RSOH 72, einen Zeiger 73 und einen Multiplexerabschnitts-Overhead MSOH 74. Der Zeiger 73 addressiert in diesem Fall jedoch eine Multiplexeinheit vom Typ AU-4 im Nutzdatenbereich. Diese besteht wiederum aus dem Zeiger selbst und einem virtuellen Container 76 vom Typ VC-4. Der VC-4 76 hat als erste Spalte einen Pfad-Overhead (POH) 77 und als zweite Spalte einen weiteren Zeiger 78, der eine kleinere Multiplexeinheit vom Typ TU-3 in seinem Nutzdatenbereich addressiert. Der TU-3 besteht aus dem Zeiger 78 und einem VC-3. Der VC-3 entspricht wie in Figur 4 und 5 gezeigt bis auf die beiden festen Spalten mit Stopfbytes in seinem Aufbau dem VC-3 aus Figur 6.

Aus den Figuren 4 bis 7 ist ersichtlich, daß wie eine Umwandlung von SONET-strukturierten Signalen in SDH-strukturierte Signale vorgenommen wird: Zunächst werden die festen Spalten mit Stopfbytes entfernt. Dies stellt kein Problem dar, da ihre Position im VC-3 vorgegeben ist. Dann wird eine übergeordnete Multiplexeinheit VC-4 gebildet und ein neuer Zeiger bestimmt, der die Position des VC-3 im VC-4 angibt. Für den VC-4 wird denn ein weiterer Zeiger bestimmt, der dessen Position im Transportrahmen bestimmt und damit eine Multiplexeinheit AU-4 gebildet. Wichtig ist, daß gemäß der Erfindung Alarme und Qualitätsüberwachungsdaten der fehlenden Multiplexebene, d.h. für den VC-4 auf Standardwerte gesetzt werden und diese Standardwerte an das Netzwerkmanagementsystem gemeldet werden.

In dem Beispiel wurde die Umwandlung der Übersicht halber für nur eine Multiplexeinheit beschrieben. Ein STM-1 kann jedoch drei AU-3 transportieren. Ebenso können drei TU-3 in einem AU-4 transportiert werden. Umwandlung und Verschachtelung der Multiplexeinheiten von SONET und SDH können aber analog zu dem für einen AC-3 gezeigten Verfahren auch für drei AU-3 ohne Einschränkung durchgeführt werden.

Aus Figur 8 gehen die Multiplexhierarchien von SDH und SONET detailliert hervor. Dabei sind die Hierarchieebenen von der untersten zur obersten in Pfeilrichtung von oben nach unten dargestellt. Entsprechende Hierarchieebenen sind auf gleicher Höhe dargestellt. Die unterste Ebene ist die physikalische Ebene ("*physical layer*"), z.B. ein über Glasfasern übertragenes amplitudenmoduliertes optisches Signal. Die zweite und dritte Hierarchieebene stellt der Transportrahmen STM-1 dar. Er ist entsprechend der Unterteilung des Overheads in RSOH und MSOH in zwei Hierarchieebenen unterteilt, da die beiden Overhead-Abschnitte an unterschiedlicher Stelle im Netzwerk ausgewertet und terminiert werden. Bei SDH folgt als vierte Hierarchieebene der AU-4, d.h. ein VC-4 mit zugeordnetem Zeiger. Diese Hierarchieebene hat bei SONET keine Entsprechung. Die fünfte Hierarchieebene bei SDH ist der TU-3, d.h. ein VC-3 mit zugehörigem Zeiger im VC-4. Dieser Hierarchieebene entspricht bei SONET der AU-3, d.h. ein VC-3 mit zugehörigem Zeiger im Overhead des Transportrahmens. Bei SDH können drei TU-3 als TUG-3 in einem VC-4 verschachtelt werden. Bei SONET werden stets drei AU-3 in einen Transportrahmen gepackt. Die oberste Hierarchieebene bilden bei SDH die VC-2 und VC-12 und bei SONET die VC-2 und VC-11. VC-12 von SDH und VC-11 von SONET entsprechen sich nicht direkt, da sie unterschiedliche Kapazität haben nämlich der VC-12 2 Mbit und der VC-11 1,5 Mbit. Ein VC-11 kann aber in einen VC-12 umgewandelt werden oder der VC-11 kann auch in SDH als solcher transportiert werden.

## Patentansprüche

1. Verfahren zum Umwandeln eines ersten synchronen Nachrichtensignals von einem ersten synchronen digitalen SONET-Nachrichtenübertragungssystem (13) in ein zweites synchrones Nachrichtensignal für ein zweites SDH-Nachrichtenübertragungssystem (11)
- wobei das erste und zweite Nachrichtensignal rahmenstrukturierte Multiplexsignale sind, die gemäß einer jeweiligen, vorgegebenen Multiplexhierarchie aus Multiplexeinheiten so zusammengesetzt werden, daß kleinere Multiplexeinheiten in größeren Multiplexeinheiten verschachtelt werden und die größeren Multiplexeinheiten in Transportrahmen übertragen werden,
- wobei die Multiplexhierarchie des ersten Nachrichtenübertragungssystems (13) zumindest eine Hierarchieebene aufweist, die einer Hierarchieebene der Multiplexhierarchie des zweiten (11) Nachrichtenübertragungssystems entspricht und die Multiplexhierarchie des zweiten Nachrichtenübertragungssystems (11) eine zusätzliche Hierarchieebene gegenüber der Multiplexhierarchie des ersten Nachrichtenübertragungssystems (13) enthält und
- wobei bei dem Verfahren die Multiplexeinheiten des ersten Nachrichtensignals in entsprechende Multiplexeinheiten des zweiten Nachrichtensignals umgesetzt und diese dann zu Multiplexeinheiten der zusätzlichen Hierarchieebene verschachtelt werden,
**dadurch gekennzeichnet, daß**
auf beide Nachrichtensignale Überwachungsfunktionen entsprechend der Multiplexhierarchie des zweiten Nachrichtenübertragungssystems (11) angewendet werden und bei der Anwendung der Überwachungsfunktionen auf das erste Nachrichtensignal die zusätzliche Hierarchieebene der Multiplexhierarchie des zweiten Nachrichtenübertragungssystems (11) simuliert wird indem zu überwachende Parameter auf Standardwerte gesetzt werden.

2. Verfahren nach Anspruch 1 bei dem die Überwachungsfunktionen Alarmüberwachung und Überwachung der Übertragungsqualität umfassen.

3. Verfahren nach Anspruch 1,
- bei dem das erste Nachrichtensignal zu ersten Transportrahmen vom Typ STS-3 strukturiert ist, welche jeweils drei Multiplexeinheiten vom Typ AU-3 enthalten, die jeweils einen virtuellen Container (66) vom Typ VC-3 und einen den virtuellen Container VC-3 adressierenden ersten Zeiger (41, 63) umfassen,
- bei dem das zweite Nachrichtensignal zu Transportrahmen vom Typ STM-1 strukturiert ist, welche jeweils eine Multiplexeinheit vom Typ AU-4 enthalten, die einen virtuellen Container (76) vom Typ VC-4 und einen den virtuellen Container VC-4 adressierenden ersten Zeiger (73) umfaßt,
- bei dem die Multiplexeinheiten AU-4 im Nutzlastbereich Untereinheiten vom Typ TU-3 enthalten,
- bei dem die Multiplexeinheiten AU-3 des ersten Nochrichtensignals in die Untereinheiten TU-3 des zweiten Nachrichtensignals umgesetzt werden,
- bei dem drei Untereinheiten TU-3 zu einer Multiplexeinheit AU-4 des zweiten Nachrichtensignals verschachtelt und diese dann in dem Transpartrahmen STM-1 des zweiten Nachrichtensignals übertragen werden und
- bei dem jeder Multiplexeinheit AU-3 vor der Umsetzung ein simulierter virtueller Container vom Typ VC-4 logisch zugeordnet wird, dessen Alarme und Qualitätsparameter auf die Standardwerte gesetzt werden.

4. Verfahren nach Anspruch 1 bei dem bei der Umsetzung aus den Multiplexeinheiten des ersten Nachrichtensignals fest vorgegebene Spalten mit Stopfbits (43) entfernt werden.

5. Vorrichtung (24, 25) zum Umwandeln eines ersten synchronen Nachrichtensignals von einem ersten synchronen digitalen SONET-Nachrichtenübertragungssystem (13) in ein zweites synchrones Nachrichtensignal für ein zweites SDH-Nachrichtenübertragungssystem (11,
- wobei die Nachrichtensignale rahmenstrukturierte Multiplexsignale sind, die gemäß einer jeweiligen, vorgegebenen Multiplexhierarchie aus Multiplexeinheiten so zusammengesetzt werden, daß kleinere Multiplexeinheiten in größeren Multiplexeinheiten verschachtelt werden und die größeren Multiplexeinheiten in Transportrahmen übertragen werden,
- wobei die Multiplexhierarchie des ersten Nachrichtenübertragungssystems (13) zumindest eine Hierarchieebene aufweist, die einer Hierarchieebene der Multiplexhierarchie des zweiten Nachrichtenübertragungssystems (11) entspricht und die Multiplexhierarchie des zweiten Nachrichtenübertragungssystems (11) eine zusätzliche Hierarchieebene gegenüber der Multiplexhierarchie des ersten Nachrichtenübertragungssystems (13) enthält und
- wobei die Vorrichtung eine Umsetzungseinrichtung (301) aufweist, die Multiplexeinheiten des ersten Nachrichtensignals in entsprechende Multiplexeinheiten des zweiten Nachrichtensignals umsetzt und diese dann zu Multiplexeinheiten der zusätzlichen Hierarchieebene verschachtelt,
**gekennzeichnet durch,**
eine Überwochungseinrichtung (311) zum Anwenden von Überwachungsfunktionen auf beide Nachrichtensignale entsprechend der Multiplexhierarchie des zweiten Nachrichtenübertragungssystems (11) und zum Simulieren der zusätzlichen Hierarchieebene der Multiplexhierarchie des zweiten Nachrichtenübertragungssystems (11) bei der Anwendung der Überwachungsfunktionen auf das erste Nachrichtensignol indem zu überwachende Parameter auf Standardwerte gesetzt werden.

## Claims

1. Method for transformation of a first synchronous message signal from a first synchronous digital SONET message transfer system (13) to a second synchronous message signal for a second SDH message transfer system (11)
- wherein the first and second message signals are framework structured multiplex signals that are composed according to a respectively predetermined multiplex hierarchy of multiplex units in a manner such that smaller multiplex units are interleaved in larger multiplex units and the larger multiplex units are transmitted over transport frames,
- wherein the multiplex hierarchy of the first message transfer system (13) has at least one hierarchy plane that corresponds to a hierarchy plane of the multiplex hierarchy of the second (11) message transfer system and the multiplex hierarchy of the second message transfer system (11) comprises an additional hierarchy plane as compared to the multiplex hierarchy of the first message transfer system (13), and
- wherein in the method the multiplex units of the second message signals are implemented and then interleaved to multiplex units of the additional hierarchy plane,
**characterised in that**
monitoring functions corresponding to the multiplex hierarchy of the second message transfer system (11) are applied to both message signals, and in the application of the monitoring functions to the first message signal the additional hierarchy plane of the multiplex hierarchy of the second message transfer system (11) is simulated **in that** parameters to be monitored are set to standard values.

2. Method according to Claim 1, wherein the monitoring functions comprise alarm monitoring and monitoring of the transfer quality.

3. Method according to Claim 1
- wherein the first message signal is structured in relation to first transport frames of type STS-3, which contain, respectively, three multiplex units of type AU-3, which each comprise a virtual type VC-3 container (66) and a first indicator (41, 63) addressing the virtual container VC-3,
- wherein the second message signal is structured in relation to the transport frame of the type STM-1, which contain, respectively, a multiplex unit of type AU-4, which each comprise a virtual type VC-4 container (76) and a first indicator (73) addressing the virtual container VC-4,
- wherein the multiplex units AU-4 contain subunits of type TU-3 in the payload area,
- wherein three subunits AU-3 of the first message signal are implemented into the subunits TU-3 of the second message signal.
- wherein three subunits TU-3 are interleaved into one multiplex unit AU-4 of the second message signal and are then transferred in the transport frame STM-1 of the second message signal, and
- wherein before implementation each multiplex unit AU-3 is logically assigned a simulated virtual container of type VC-4, whose alarms and quality parameters are set to standard values.

4. Method according to Claim 1, wherein in the implementation set columns with stuffing bits (43) are removed from the multiplex units of the first message signal.

5. Device (24, 25) for transformation of a first synchronous message signal from a first synchronous digital SONET message transmission system (13) to a second synchronous message signal for a second SDH message transmission system (11)
- wherein the message signals are framework structured multiplex signals that are composed according to a respectively predetermined multiplex hierarchy of multiplex units in a manner such that smaller multiplex units are interleaved in larger multiplex units and the larger multiplex units are transmitted over transport frames,
- wherein the multiplex hierarchy of the first message transfer system (13) has at least one hierarchy plane that corresponds to a hierarchy plane of the multiplex hierarchy of the second (11) message transfer system, and the multiplex hierarchy of the second message transfer system (11) comprises an additional hierarchy plane as compared to the multiplex hierarchy of the first message transfer system (13), and
- wherein the device comprises an implementation apparatus (301) that implements multiplex units of the first message signals to matching multiplex units of the second message signals and then interleaves them to multiplex units of the additional hierarchy plane,
**characterised by**
a monitoring apparatus (311) for the application of monitoring functions to both message signals corresponding to the multiplex hierarchy of the second message transfer system (11) and for the simulation of the additional hierarchy plane of the multiplex hierarchy of the second message transfer system (11) in the application of the monitoring functions to the first message signal, in that the parameters to be monitored are set to standard values.

## Revendications

1. Procédé pour convertir un premier signal d'information synchrone provenant d'un premier système de transmission d'informations SONET (13) numérique synchrone en un deuxième signal d'information synchrone pour un deuxième système de transmission d'informations SDH (11)
- le premier et le deuxième signal d'information étant des signaux multiplexés structurés en trames qui, conformément à une hiérarchie de multiplexage prédéfinie correspondante, sont composés à partir d'unités de multiplexage de telle sorte que les unités de multiplexage plus petites sont entrelacées en unités de multiplexage plus grandes et les unités de multiplexage plus grandes sont transmises dans des trames de transport,
- la hiérarchie de multiplexage du premier système de transmission d'informations (13) présentant au moins un niveau hiérarchique qui correspond à un niveau hiérarchique de la hiérarchie de multiplexage du deuxième (11) système de transmission d'informations et la hiérarchie de multiplexage du deuxième système de transmission d'informations (11) comprenant un niveau hiérarchique supplémentaire par rapport à la hiérarchie de multiplexage du premier système de transmission d'informations (13), et
- les unités de multiplexage du premier signal d'information étant converties lors du procédé en unités de multiplexage correspondantes du deuxième signal d'information et celles-ci étant ensuite entrelacées en unités de multiplexage du niveau hiérarchique supplémentaire,
**caractérisé en ce que**
des fonctions de surveillance sont appliquées aux deux signaux d'information en fonction de la hiérarchie de multiplexage du deuxième système de transmission d'informations (11) et lors de l'application des fonctions de surveillance au premier signal d'information, le niveau hiérarchique supplémentaire de la hiérarchie de multiplexage du deuxième système de transmission d'informations (11) est simulé en attribuant des valeurs par défaut aux paramètres à surveiller.

2. Procédé selon la revendication 1, dans lequel les fonctions de surveillance comprennent la surveillance des alarmes et la surveillance de la qualité de transmission.

3. Procédé selon la revendication 1,
- dans lequel le premier signal d'information est structuré en premières trames de transport de type STS-3, lesquelles contiennent à chaque fois trois unités de multiplexage de type AU-3 qui englobent respectivement un conteneur virtuel (66) de type VC-3 et un premier pointeur (41, 63) dirigé vers le conteneur virtuel VC-3,
- dans lequel le deuxième signal d'information est structuré en trames de transport de type STM-1, lesquelles contiennent à chaque fois une unité de multiplexage de type AU-4 qui englobe un conteneur virtuel (76) de type VC-4 et un premier pointeur (73) dirigé vers le conteneur virtuel VC-4,
- dans lequel les unités de multiplexage AU-4 contiennent des sous-unités de type TU-3 dans la zone de la charge utile
- dans lequel les unités de multiplexage AU-3 du premier signal d'information sont converties en sous-unités TU-3 du deuxième signal d'information,
- dans lequel trois sous-unités TU-3 sont entrelacées en une unité de multiplexage AU-4 du deuxième signal d'information et celles-ci sont ensuite transmises dans les trames de transport STM-1 du deuxième signal d'information et
- dans lequel un conteneur virtuel simulé de type VC-4, dont les alarmes et les paramètres de qualité sont mis à leurs valeurs par défaut, est associé logiquement à chaque unité de multiplexage avant la conversion.

4. Procédé selon la revendication 1, dans lequel des colonnes prédéfinies fixes contenant des bits de remplissage (43) sont supprimées des unités de multiplexage du premier signal d'information lors de la conversion.

5. Dispositif (24, 25) pour convertir un premier signal d'information synchrone provenant d'un premier système de transmission d'informations SONET (13) numérique synchrone en un deuxième signal d'information synchrone pour un deuxième système de transmission d'informations SDH (11)
- les signaux d'information étant des signaux multiplexés structurés en trames qui, conformément à une hiérarchie de multiplexage prédéfinie correspondante, sont composés à partir d'unités de multiplexage de telle sorte que les unités de multiplexage plus petites sont entrelacées en unités de multiplexage plus grandes et les unités de multiplexage plus grandes sont transmises dans des trames de transport,
- la hiérarchie de multiplexage du premier système de transmission d'informations (13) présentant au moins un niveau hiérarchique qui correspond à un niveau hiérarchique de la hiérarchie de multiplexage du deuxième système de transmission d'informations (11) et la hiérarchie de multiplexage du deuxième système de transmission d'informations (11) comprenant un niveau hiérarchique supplémentaire par rapport à la hiérarchie de multiplexage du premier système de transmission d'informations (13), et
- le dispositif présentant un dispositif de conversion (301) qui convertit les unités de multiplexage du premier signal d'information en unités de multiplexage correspondantes du deuxième signal d'information et entrelace ensuite celles-ci en unités de multiplexage du niveau hiérarchique supplémentaire,
**caractérisé par**
un dispositif de surveillance (311) pour appliquer des fonctions de surveillance aux deux signaux d'information en fonction de la hiérarchie de multiplexage du deuxième système de transmission d'informations (11) et pour simuler le niveau hiérarchique supplémentaire de la hiérarchie de multiplexage du deuxième système de transmission d'informations (11) lors de l'application des fonctions de surveillance au premier signal d'information en attribuant des valeurs par défaut aux paramètres à surveiller.
